# EUROPEAN PATENT APPLICATION

(11) **EP 4 471 428 A1**
(43) Date of publication of application: **04.12.2024**
(21) Application number: 23746796.4
(22) Date of filing: 18.01.2023
(51) Int. Cl.: G01N 35/00

(54) **AUTOMATIC ANALYSIS DEVICE AND AUTOMATIC ANALYSIS METHOD**

(30) Priority: 28.01.2022 JP 2022011909
(71) Applicant: HITACHI HIGH-TECH CORPORATION, Tokyo 105-6409 (JP)
(72) Inventor: TAKAKURA Tatsuki, Tokyo 105-6409 (JP); YASUI Akihiro, Tokyo 105-6409 (JP); NODA Kazuhiro, Tokyo 105-6409 (JP); Umeki Hiroya, Tokyo 105-6409 (JP)
(74) Representative: Strehl Schübel-Hopf & Partner
(86) International application number: PCT/JP2023/001411
(87) International publication number: WO 2023/145582

(57) **Abstract**

The automatic analyzer includes one or more common analysis units to be sharedly used in the first analysis process step and the second analysis process step, and a control section 3 for controlling an operation of the common analysis unit. The first analysis process step is executable repeatedly in each first cycle time. The second analysis process step is executable repeatedly in each second cycle time. The second cycle time is set as a positive integer multiple of the first cycle time. The first cycle time includes a first time zone, and a second time zone which is not overlapped with the first time zone. A first time chart is provided to operate the common analysis unit for performing an operation unique to the first analysis process step in the first time zone, and to operate the common analysis unit for performing an operation unique to the second analysis process step in the second time zone.

## Description

### Technical Field

This invention relates to an automatic analyzer and an automatic analysis method.

### Background Art

As an example of automatic analyzers in which a reaction is caused between an analysis reagent that reacts specifically with a component to be measured in the sample such as blood and/or the like and the sample, and then the resulting reactant is measured mainly by spectroscopic technique, Patent Literature 1 provides a description that a biochemical test and an immunological test are performed in a single analyzer and some of mechanisms used in analysis are shared between biochemical analysis process step and immunoanalytical process step in order to achieve a simplification of device structure.

### Citation List

### Patent Literature

Patent Literature 1: WO2010/117044

### Summary of Invention

### Technical Problem

According to Patent Literature 1, analysis processes for immunoanalytical test and biochemical test requiring pretreatment are performed on a middle disc to achieve shared use of a pretreatment dispensing mechanism and an immunoanalytical reagent dispensing mechanism, thereby simplifying the device structure.

However, due to incapability of simultaneously resampling the pretreated sample into the biochemical analysis section and resampling the pretreated sample into the immunoanalytical section, proper scheduling is required to prevent overlapping of resampling timing. Therefore, there is a problem of a decrease in throughput if the analysis processes are simultaneously performed.

This invention provide an automatic analyzer and an automatic analysis method capable of efficiently inspecting multiple items, and preventing deterioration in analytical performance while simplifying the device structure.

### Solution to Problem

This invention includes a plurality of means for solving the above problems. As one example, an automatic analyzer which allows parallel execution of a first analysis process step and a second analysis process step each for different item is provided. The automatic analyzer includes: one or more common analysis units to be sharedly used in the first and the second analysis process steps; and a control section for controlling an operation of the common analysis unit. The first analysis process step is executable repeatedly in each first cycle time, the second analysis process step is executable repeatedly in each second cycle time, the second cycle time is set as a positive integer multiple of the first cycle time, the first cycle time includes a first time zone, and a second time zone which is not overlapped with the first time zone, and a first time chart is provided to operate the common analysis unit for an operation unique to the first analysis process step in the first time zone, and to operate the common analysis unit for an operation unique to the second analysis process step in the second time zone.

### Advantageous Effects of Invention

According to the present invention, it is possible to efficiently inspect multiple items, and to prevent deterioration in analytical performance while simplifying the device structure. Objects, configurations, and effects other than the above will be apparent from the description of the following embodiments.

### Brief Description of Drawings

Fig. 1 is a schematic view of a structure of an automatic analyzer according to a first embodiment.
Fig. 2 illustrates an analysis cycle of a first analysis process step executed by the automatic analyzer according to the first embodiment.
Fig. 3 illustrates an analysis cycle of a second analysis process step executed by the automatic analyzer according to the first embodiment.
Fig. 4 illustrates a first time chart of the automatic analyzer according to the first embodiment.
Fig. 5 illustrates a time chart as a part of the first time chart of the automatic analyzer according to the first embodiment for executing the first and the second analysis process steps.
Fig. 6 illustrates a time chart as a part of the first time chart of the automatic analyzer according to the first embodiment for executing only the first analysis process step.
Fig. 7 illustrates a second time chart of the automatic analyzer according to the first embodiment.
Fig. 8 is a schematic view of a structure of an automatic analyzer according to a second embodiment.
Fig. 9 illustrates a structure of a flow passage of the automatic analyzer according to the second embodiment.
Fig. 10 illustrates a first time chart of the automatic analyzer according to the second embodiment.
Fig. 11 illustrates a time chart as a part of the first time chart of the automatic analyzer according to the second embodiment for executing the first and the second analysis process steps.
Fig. 12 illustrates a time chart as a part of the first time chart of the automatic analyzer according to the second embodiment for executing only the first analysis process step. Description of Embodiments

Embodiments of an automatic analyzer and an automatic analysis method will be described below with reference to the accompanying drawings.

It is noted that each of the embodiments described below is merely an example, and modifications can be made without departing from the sprit and scope. Further, the characteristics illustrated and described along with an exemplary aspect may be combined with characteristics of another aspect.

Further, throughout the drawings used herein, the same or similar reference signs denote the same or corresponding elements and a repetitive description regarding the elements may be sometimes omitted.

### First Embodiment

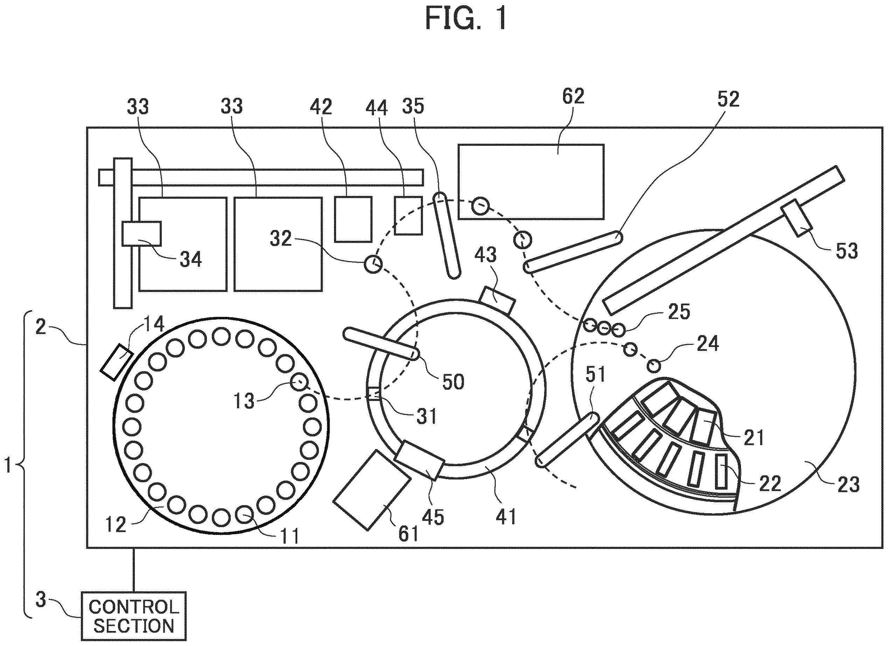

A first embodiment of an automatic analyzer and an automatic analysis method will be described with reference to Fig. 1 to Fig. 7.

Initially, an overall configuration of the automatic analyzer is described with reference to Fig. 1. Fig. 1 is a diagram illustrates an example of the configuration diagrams of the automatic analyzer.

The automatic analyzer 1 is an apparatus for analyzing a sample using reagents according to predetermined analysis items, which is essentially comprised of an analysis section 2 and a control section 3.

The analysis section 2 includes a sample holding section 12, a sample dispensing mechanism 50, a reagent holding section 23, a first reagent dispensing mechanism 51, a second reagent dispensing mechanism 52, a first incubator 41, a reagent stirring mechanism 53, a first conveying mechanism 34, a second incubator 42, a second stirring mechanism 44, a reaction vessel tray 33, a second conveying mechanism 35, a second measurement section 62, a first stirring mechanism 43, a first measurement section 61, a cleaning mechanism 45, and the like.

The sample holding section 12 is structured to be able to hold, in a ring fashion, a plurality of sample containers 11 that contain samples to be analyzed in a first analysis process step and a second analysis process step. For dispensing sample, the sample holding section 12 rotates to transfer the sample container 11 to an access position to the sample dispensing mechanism 50. The sample holding section 12 includes a sample aspiration position 13. Immediately before the sample dispensing mechanism 50 aspirates a sample to be analyzed, the sample holding section 12 rotates to convey the sample container 11 to the sample aspiration position 13.

It is noted that the sample holding section 12 may be configured to be made usable in the manner in which two sample holding sections 12 are physically replaced with each other. For example, the two sample holding sections 12 may be configured in the alternately replaceable manner. Alternatively, the sample holding section 12 may be configured to be mounted with a small window through which a sample can be added or exchanged in the middle. However, the form of the user installing by oneself is not necessary to be taken, and a conveying form using a conveying mechanism and/or the like may be taken. Without limited to the disc scheme in which the sample containers are conveyed by the rotational operation as illustrated in the figures, a rack scheme to convey collectively a plurality of sample containers may be taken. A sample information acquisition section 14 for acquiring (reading) sample information attached to the sample container 11 is further included in proximity to the sample holding section 12. By acquiring the sample information immediately before dispensing sample, it may be verified whether or not the sample container in question is a sample container to be analyzed.

The sample dispensing mechanism 50 is configured to include a rotation driving mechanism, a vertical driving mechanism and a dispensing probe such that, when a first reaction vessel 31 and a second reaction vessel 32 are at respective predetermined positions to dispense the sample, the sample dispensing mechanism 50 can access the predetermined positions. The sample dispensing mechanism 50 is moved between a sample aspiration position and a sample discharge position by the rotation driving mechanism and the vertical driving mechanism, so that the sample is dispensed in the sample aspiration position 13, and then is discharged to the first reaction vessel 31 and the second reaction vessel 32. It is noted that, as illustrated in the figures, the configuration to make access to each position by means of the rotational operation may be employed, or alternatively, the configuration to make access to each position by means of the linear motion operation may be employed.

The reagent holding section 23 is a mechanism for holding a plurality of first reagent containers 21 that contain reagents used in a first analysis process step to induce a reaction in the first reaction vessel 31, and a plurality of second reagent containers 22 that contain reagents used in a second analysis process step to induce a reaction in the second reaction vessel 32. The reagent holding section 23 has a reagent disc and a reagent container holding section (both are omitted for the purpose of graphical expression). The reagent holding section 23 has a cooling function.

The reagent container holding sections are arranged in a double ring shape on the reagent disc, and are configured to hold a plurality of first reagent containers 21 and a plurality of second reagent containers 22. The reagent disc has a rotation driving mechanism, so that each of the first reagent containers 21 or second reagent containers 22 is moved to a predetermined position on the circumferential portion by the rotational motion.

In the reagent holding section 23, where the reagent holding section 23 is of the disc scheme, the reagent holding section 23 rotates before dispensing reagent, a proper reagent container is conveyed to a first reagent aspiration position 24 or a second reagent aspiration position 25 so that the first reagent dispensing mechanism 51 and the second reagent dispensing mechanism 52 are able to aspirate a reagent required for analysis. The first reagent containers 21 and the second reagent containers 22 are each comprised of a plurality of different reagent bottles. Where the first reagent container 21 and the second reagent container 22 differ in shape from each other, positions dedicated to holding the respective reagent containers may be provided, or alternatively, a single position may be shaped to hold both the reagent containers.

The automatic analyzer 1 according to the embodiment includes individually the first reagent dispensing mechanism 51 for use in biochemical analysis and for dispensing a reagent from the first reagent container 21 into the first reaction vessel 31, and the second reagent dispensing mechanism 52 for use in immunoanalysis and for dispensing a reagent from the second reagent container 22 into the second reaction vessel 32. The configurations of both the first reagent dispensing mechanism 51 and the second reagent dispensing mechanism 52 are the same as each other, and each mechanism includes a rotation driving mechanism, a vertical driving mechanism and a dispensing probe.

The first reagent dispensing mechanism 51 and the second reagent dispensing mechanism 52 rotate and move down to positions of the first reagent container 21 and the second reagent container 22 for predetermined kinds of reagents in the reagent holding section 23 in order to aspirate the predetermined amounts of reagents. After reagent aspiration, the first reagent dispensing mechanism 51 and the second reagent dispensing mechanism 52 move up. Then, as to reagent discharge destination, for example, the first reagent dispensing mechanism 51 for biochemical analysis rotates and moves down to a predetermined first reaction vessel 31 on the first incubator 41, and the second reagent dispensing mechanism 52 for immunoanalysis rotates and moves down to a second reaction vessel 32 for immune item analysis which is placed in a reagent discharge position, so that the respective reagents are discharged.

Above the reagent holding section 23, a reagent stirring mechanism 53 (also referred to as a stirrer) is installed as stirring means for stirring a reagent contained in the second reagent container 22. The reagent stirring mechanism 53 moves into an area above the first reagent container 21 or the second reagent container 22 containing a magnetic particle solution to be stirred. The reagent stirring mechanism 53 moves down a magnetic particle stirring element and then rotates the stirring element in order to stir the magnetic particle solution. To prevent natural precipitation of magnetic particles in the solution, the reagent stirring mechanism 53 stirs the magnetic particles immediately before the reagent is dispensed.

An immunoanalysis flow will be described below in process sequence.

The first conveying mechanism 34 has driving mechanisms in the X-axis, Y-axis and Z-axis directions and a reaction-vessel grasping mechanism, and moves above a reaction vessel discarding hole, the second incubator 42, the second stirring mechanism 44 and the reaction vessel tray 33.

The second conveying mechanism 35 has a rotation driving mechanism, a vertical driving mechanism and a reaction-vessel grasping mechanism, and includes function of moving a second reaction vessel 32 to the second stirring mechanism 44 and/or each reaction vessel placement position such as a sample discharge position and the like which are installed on the rotational trajectory, the second reaction vessel 32 being to contain a reaction liquid with the sample and the reagent mixed in the second analysis process step.

The first conveying mechanism 34 moves a second reaction vessel 32 from the reaction vessel tray 33 holding a plurality of second reaction vessels 32, to the sample discharge position. The sample dispensing mechanism 50 dispenses the predetermined amount of sample into the second reaction vessel 32 placed in the sample discharge position. Subsequently, the second reaction vessel 32 into which the sample has been discharged is moved to the reagent discharge position by the second conveying mechanism 35.

The second reagent dispensing mechanism 52 dispenses the predetermined amount of reagent into the second reaction vessel 32 placed in the reagent discharge position. Subsequently, the second reaction vessel 32 is moved to a position of the second stirring mechanism 44 by the second conveying mechanism 35 so that the liquid mixture within the second reaction vessel 32 is stirred.

After the reaction liquid is stirred, the second reaction vessel 32 is moved to the second incubator 42 by the first conveying mechanism 34. The second incubator 42 holds the second reaction vessel 32 and the temperature therein is adjusted to a proper temperature for the purpose of accelerating the reaction of the sample and the reagent. Upon completion of the sample-reagent reaction process on the second incubator 42, the second reaction vessel 32 is moved to the sample discharge position by the first conveying mechanism 34.

Subsequently, the second conveying mechanism 35 moves the second reaction vessel 32 to a reaction liquid aspiration position that is installed below the second measurement section 62 in which the reaction liquid is measured in the second analysis process step for analyzing an immune item of the sample. Subsequently, the reaction liquid is aspirated into a detection portion in the second measurement section 62 to perform a measurement of a reaction signal.

After the signal measurement, the second reaction vessel 32 is moved to the sample discharge position by the second conveying mechanism 35, and then is discarded into a reaction vessel waste hole by the first conveying mechanism 34.

A biochemical analysis flow will be described then in process sequence.

The first incubator 41 is a mechanism for holding the reaction liquid, i.e., the first reaction vessel 31, for analysis by the first measurement section 61 in which the reaction liquid is measured in the first analysis process step. Similarly to the second incubator 42, the temperature in the first incubator 41 is adjusted to a proper temperature for the purpose of accelerating the reaction of the sample and the reagent.

Initially, the sample dispensing mechanism 50 dispenses the predetermined amount of sample into a predetermine first reaction vessel 31 located on the first incubator 41, the first reaction vessel 31 being to contain a reaction liquid with the sample and a reagent mixed in the first analysis process step. Subsequently, the first incubator 41 rotates so that the first reaction vessel 31 into which the sample is discharged is moved to the access position to the first reagent dispending mechanism 51. The first reagent dispensing mechanism 51 dispenses the predetermined amount of reagent into the first reaction vessel 31 into which the sample is discharged.

Then, the first incubator 41 rotates so that the first reaction vessel 31 into which the sample and the reagent are discharged is moved to the position where the first stirring mechanism 43 is placed. The sample and the reagent within the first reaction vessel 31 are stirred by the first stirring mechanism 43.

Upon completion of the sample-reagent reaction process on the first incubator 41, the first incubator 41 rotates so that the first reaction vessel 31 containing the post-reaction reaction liquid is moved to the placement position of the first measurement section 61 for analyzing biochemical items of the sample.

Subsequently, a measurement of a reaction signal is performed by a detection portion in the first measurement section 61. After the signal measurement, the reaction liquid is discharged from the first reaction vessel 31 on the first incubator 41 by the cleaning mechanism 45.

The above-described mechanisms of the automatic analyzer 1 are referred to as an analytical operation section.

Further, in addition to the analytical operation section, the automatic analyzer 1 includes a control section 3 for controlling the operation of each equipment, including the sample holding section 12 and the sample dispensing mechanism 50, within the automatic analyzer 1.

The control section 3 may be comprised of a computer having a display such as a liquid crystal display and/or the like, input equipment, a storage device, CPU, memory and/or the like, or alternatively may be comprised of another computer as being comprised of a single computer, without particular limitation.

In the embodiment, in response to a measurement request of a measurement item to be measured in the first analysis process step or a measurement item to be measured in the second analysis process step, the control section 3 may execute the operation of a common analysis unit in a first time zone or a second time zone in a first time chart. The details will be described later.

The control on operation of each equipment by the control section 3 is executed based on various programs recorded in the storage device. It is noted that the operational control processing executed by the control section 3 may be performed by a single collectively designed program or may be performed by a plurality of separate programs, or alternatively, by a combination thereof. A portion or all of the program may be implemented by dedicated hardware or may be modularized.

The above is the configuration of the automatic analyzer 1 according to the embodiment.

It is noted that the configuration of the automatic analyzer is not limited to the configuration in which different reaction vessels are used depending on the first reaction vessel 31 for the first analysis process step and the second reaction vessel 32 for the second analysis process step as illustrated in Fig. 1, and the configuration of the automatic analyzer may be a configuration in which a common reaction vessel is used for the first analysis process step and the second analysis process step.

Also, the first analysis process step has been described as being performed for biochemical items and the second analysis process step has been described as being performed for immune items, but the analysis process steps may be performed for other analysis items as long as the analysis items differ from each other.

Further, different reagents (the first reagent container 21 and the second reagent container 22) have been described as being used in the first analysis process step and the second analysis process step, but a common reagent may be used, without particular limitation.

Also, the automatic analyzer is not limited to the form of a single analysis module configuration as illustrated in Fig. 1, and may be configured to use a conveying apparatus to connect together two or more of an analysis module(s) available for measurement of various same or different analysis items, and a pretreatment module(s) for performing pretreatment.

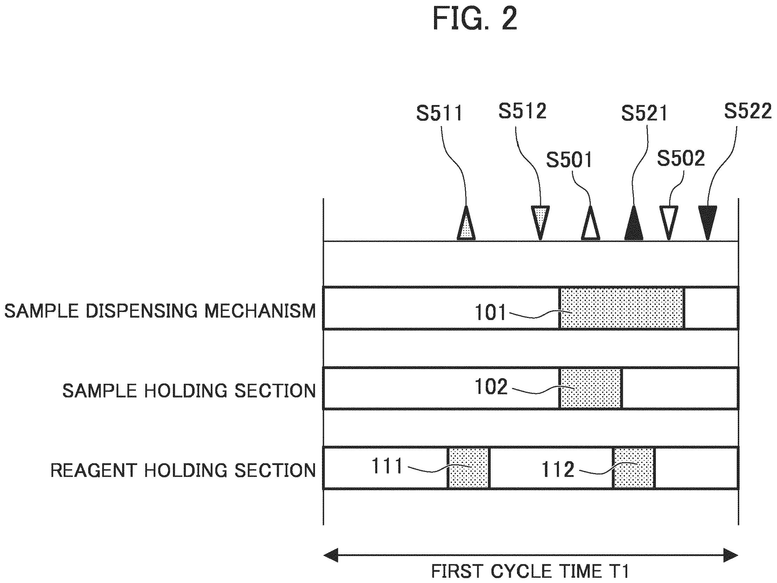

A characteristic configuration according to the embodiment will be then described with reference to Fig. 2 and subsequent figures.

The automatic analyzer 1 is configured to be capable of performing concurrently the first analysis process step and the second analysis process step which are for different items from each other.

Describing classification of individual mechanisms within the configuration, the mechanisms are classified into a first analysis unit used only in the first analysis process step, a second analysis unit used only in the second analysis process step, and a common analysis unit shared in both the first analysis process step and the second analysis process step.

The sample holding section 12, the reagent holding section 23, the sample dispensing mechanism 50 and the like correspond to units used as the common analysis units in both the first analysis process step and the second analysis process step. The first analysis units basically correspond to units other than the common analysis units, among the individual mechanisms appearing in the above description in the section of the biochemical analysis flow. The second analysis unit basically correspond to units other than the common analysis units, among the individual mechanisms appearing in the above description in the section of the immunoanalysis flow.

It is noted that, for optimization of the device structure, it is possible to select optionally which analysis unit to be shared and used as necessary, without limitation to the configurations according to the embodiment.

For example, in the case of the automatic analyzer in the form of using a common reaction vessel in both the first analysis process step and the second analysis process step as described above, mechanisms corresponding to the first reagent dispensing mechanism 51, the first incubator 41 and the first stirring mechanism 43 of the individual mechanisms of the automatic analyzer illustrated in Fig. 1 are further classified into the common analysis units, in addition to the sample holding section 12, the reagent holding section 23 and the sample dispensing mechanism 50.

The analysis flow is described below in detail with emphasis on the operation of the common analysis unit with the first analysis process step assigned to the biochemical analysis, the second analysis process step assigned to immunoanalysis.

Fig. 2 is a diagram illustrating an analysis cycle of the biochemical analysis. The cycle time of the biochemical analysis is a first cycle time T1, and the operation of each analysis unit is repeatedly performed with the first cycle time T1 as a basic unit.

First, the sample dispensing mechanism 50 aspirates a sample from a sample container 11 (S501), and then discharges the sample into a first reaction vessel 31 held by the first incubator 41 (S502). At this time, the sample dispensing mechanism 50 is used in a time zone 101, and the sample holding section 12 is used in a time zone 102.

Subsequently, after the elapse of a predetermined number of cycles, the first incubator 41 rotates so as to move the first reaction vessel 31 to a reagent discharge position. The first reagent dispensing mechanism 51 aspirates a first reagent in the first reagent container 21 (S511), and then discharges the reagent into the first reaction vessel 31 (S512). At this time, the reagent holding section 23 is used in a time zone 111. Although the above-described elapsed number of cycles can be optionally set, for the purpose of initiating the reaction between the sample and the reagent as quickly as possible, zero cycles or the lowest possible number of cycles is preferable.

Further, after the elapse of the predetermined number of cycles, the first incubator 41 rotates so as to move the first reaction vessel 31 to the reagent discharge position, and the first reagent dispensing mechanism 51 aspirates a second reagent in the first reagent container 21 (S521), and then discharges the reagent into the first reaction vessel 31 (S522). At this time, the reagent holding section 23 is used in a time zone 112.

In this connection, it is desirable to configure to prevent overlap of the time zone 111 and the time zone 112.

While the dispensing of sample and reagent is being performed as described above, the first incubator 41 is repeatedly rotated as appropriate so that the first stirring mechanism 43 performs stirring in the first reaction vessel 31 and/or the first measurement section 61 performs an absorbance measurement in the first reaction vessel 31. Upon completion of the measurement, the cleaning mechanism 45 cleans the used first reaction vessel 31. After cleaning, the first reaction vessel 31 is used again in a next analysis operation.

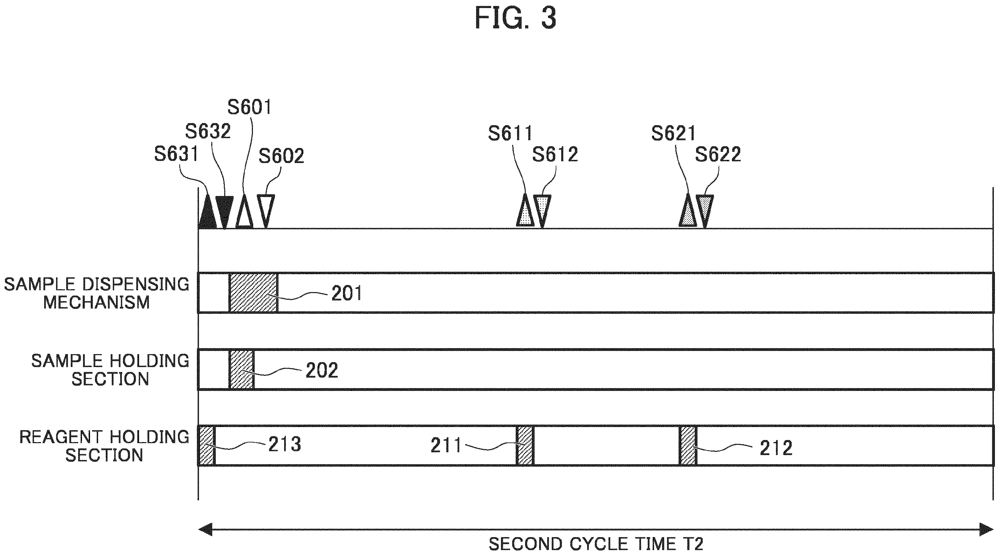

Fig. 3 is a diagram illustrating an analysis cycle of the immunoanalysis. The cycle time of the immunoanalysis is a second cycle time T2. The operation of each analysis unit related to an immune item is repeatedly performed with the second cycle time T2 as a basic unit.

First, the sample dispensing mechanism 50 aspirates a sample from a sample container 11 (S601), and then discharges the sample into a second reaction vessel 32 (S602), the second reaction vessel 32 having been previously conveyed to a sample discharge position from the reaction vessel tray 33 by the first conveying mechanism 34. At this time, the sample dispensing mechanism 50 is used in a time zone 201, and the sample holding section 12 is used in a time zone 202.

Subsequently, after the elapse of a predetermined number of cycles, the second conveying mechanism 35 conveys the second reaction vessel 32 to a reagent discharge position. The second reagent dispensing mechanism 52 aspirates a first reagent in the second reagent container 22 (S611), and then discharges the reagent into the second reaction vessel 32 (S612). At this time, the reagent holding section 23 is used in a time zone 211. Although the above-described elapsed number of cycles can be optionally set, for the purpose of initiating the reaction between the sample and the reagent as quickly as possible, zero cycles or the lowest possible number of cycles is preferable.

Further, after the elapse of the predetermined number of cycles, the second conveying mechanism 35 conveys the second reaction vessel 32 to the reagent discharge position, and the second reagent dispensing mechanism 52 aspirates a second reagent in the second reagent container 22 (S621), and then discharges the reagent into the second reaction vessel 32 (S622). At this time, the reagent holding section 23 is used in a time zone 212.

Further, after the elapse of the predetermined number of cycles, the second conveying mechanism 35 conveys the second reaction vessel 32 to the reagent discharge position, and the second reagent dispensing mechanism 52 aspirates a third reagent in the second reagent container 22 (S631), and then discharges the reagent into the second reaction vessel 32 (S632). At this time, the reagent holding section 23 is used in a time zone 213. Immediately before the dispensing operation, as needed, the reagent stirring mechanism 53 stirs the third reagent. The above-described time zones 211, 212 and 213 are desirably configured to prevent an overlap with each other within the frame of the second cycle time T2.

While the dispensing of sample and reagent is being performed as described above, the first conveying mechanism 34 and the second conveying mechanism 35 convey the second reaction vessel 32 to the second stirring mechanism 44 and/or the second incubator 42 to perform the mixing of reaction liquid and/or the reaction acceleration. Upon the elapse of the predetermined number of cycles and completion of the reaction process, the second reaction vessel 32 is conveyed to the second measurement section 62 to undergo an optical measurement. After completion of the measurement, the second reaction vessel 32 is discarded.

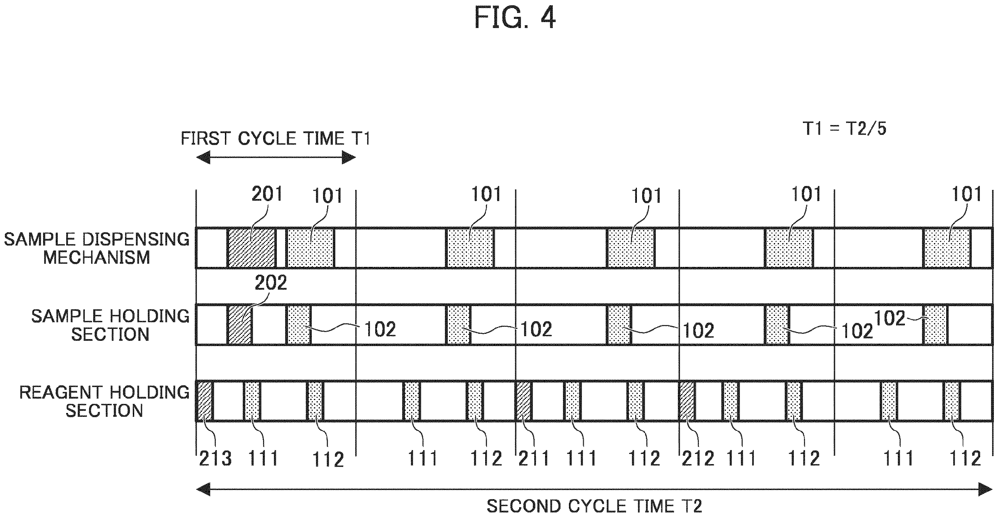

Fig. 4 is a diagram illustrating the analysis cycle where the biochemical analysis and the immunoanalysis are concurrently performed.

The second cycle time T2 for the immunoanalysis is configured as a positive integer multiple of the first cycle time T1 for the biochemical analysis. Fig. 4 shows T1 = T2/5, i.e., the case where the second cycle time T2 is five times longer than the first cycle time T1, in which 5 repetitions of the analysis cycle shown in Fig. 2 are superimposed on the analysis cycle shown in Fig. 3.

A description is now given of the operation of a common analysis unit where a multitude of analyses is continuously performed.

Taking, for example, the sample dispensing mechanism 50, in a case where the first cycle time T1 for the biochemical analysis is as a reference, the sample dispensing mechanism 50 is used in every cycle in the biochemical analysis. In the immunoanalysis, however, the sample dispensing mechanism 50 is used only once every 5 cycles, in the first cycle of the biochemical analysis.

Since a cycle in which the sample dispensing mechanism 50 is likely to be used for both analyses occurs once every five cycles in terms of first cycle, the time zone 101 and the time zone 201 in which the sample dispensing mechanism 50 in the individual process steps is used are configured to prevent overlap with each other. Thereby, even if the analysis is repeatedly performed, overlap is prevented between the sample dispensing operation for the biochemical analysis and the sample dispensing operation for the immunoanalysis. Therefore, the sample dispensing operation is able to be performed absolutely independently in the biochemical analysis and the immunoanalysis.

Likewise, concerning the sample holding section 12 and the reagent holding section 23, the time zones used in both the process steps of the biochemical analysis and the immunoanalysis are also configured to prevent overlap with each other.

This applies similarly to the configuration corresponding to the first reagent dispensing mechanism 51, the first incubator 41 and/or the first stirring mechanism 43 in the automatic analyzer in the form of using the common reaction vessel in the first analysis process step and the second analysis process step. For example, a mechanism corresponding to the first reagent dispensing mechanism 51 is basically on the same chart as the reagent holding section 23, and a mechanism corresponding to the first incubator 41 and the first stirring mechanism 43 is basically on the same chart as the sample dispensing mechanism 50, so that details thereof are omitted.

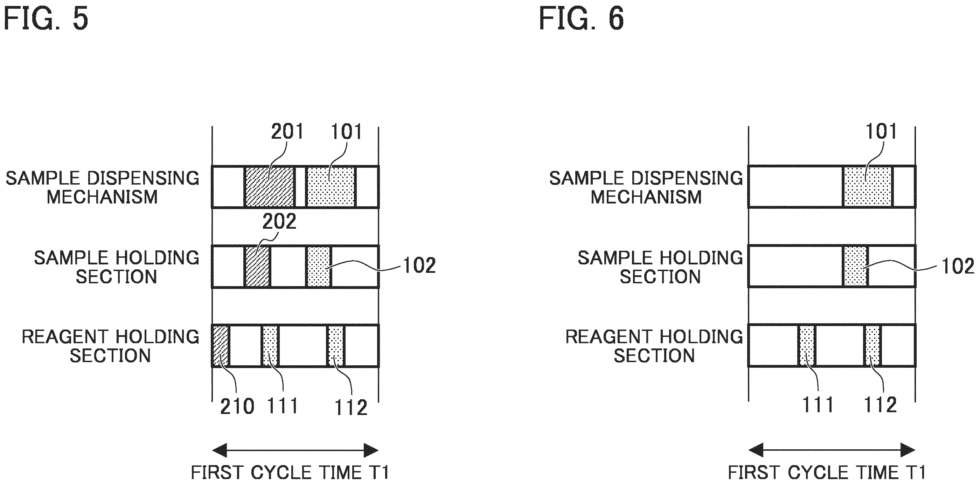

It is noted that although the time zones 211, 212, 213 correspond to the dispensing operations for the first reagent, the second reagent and the third reagent for the immunoanalysis, respectively, all the operations are desirably performed at the same timing within the frame of the first cycle time T1. This is for the reason that the configuration in which the time zone 210 used for the immunoanalysis reagent dispensing operation as described later in Fig. 5 covers all the time zones 211, 212, 213 is needed.

As illustrated in Fig. 4, the configuration is provided to allow, in the first time chart, the common analysis unit to be operated for the operation unique to the biochemical analysis as the first analysis process step in the time zones 101, 102, 111, 112 as the first time zone, and the common analysis unit to be operated for the operation unique to the second analysis process step in the time zones 201, 202, 211, 212, 213 as the second time zone.

Fig. 5 illustrates the case where, in the first cycle time T1 in the first time chart, the operation of the biochemical analysis and the operation of the immunoanalysis are performed in parallel. On the other hand, Fig. 6 illustrates the case where, in the first cycle time T1, only the operation of the biochemical analysis is performed, and the operation of the immunoanalysis is not performed.

It is noted that although Fig. 4 is a diagram illustrating collectively the operations of the sample dispensing mechanism 50, the sample holding section 12 and the reagent holding section 23 as a first time chart, it is possible to select, as appropriate depending on analysis conditions, which of the operation for the biochemical analysis and the operation for the immunoanalysis is performed in each common analysis unit.

For example, in the third cycle and the fourth cycle in the first cycle time T1 in Fig. 4, only the operation for the biochemical analysis is performed for the sample dispensing mechanism 50 and the sample holding section 12, and the operations of both the biochemical analysis and the immunoanalysis are performed for the reagent holding section 23. Thus, the operations required for both the analyses are able to be performed without problems.

Also, although the case where a multitude of analyses is continuously performed has been described above, in the case where the analyses are intermittently performed, if there is unnecessary operation of a certain analysis unit, the operation may not be performed simply.

By configuring the first time chart as described above, even if the biochemical analysis and the immunoanalysis are continuously performed at the same time, the operational timing of the common analysis units may be prevented from causing interference with each other, thereby avoiding throughput degradation.

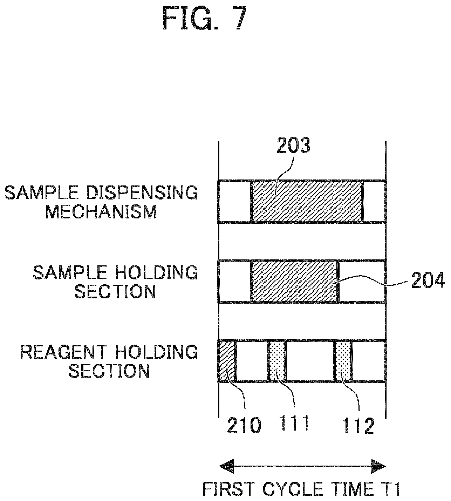

Further, it is desirable to have further a second time chart configured to use the common analysis unit for an operation unique to the second analysis process step in both the first time zone and the second time zone. Fig. 7 is a diagram illustrating the second time chart for each common analysis unit.

As illustrated in Fig. 7, if the second time chart is used, the control section 3 is desirably configured not to perform the first analysis process step requiring use of the first time chart in the time zone in which the second time chart is executed.

Fig. 7 illustrates the example where the time zone 203 and the time zone 204 which are usable for only the immunoanalysis are assigned to the sample dispensing mechanism 50 and the sample holding section 12, respectively.

The time zone 203 covers the time zone 101 and the time zone 201, and similarly the time zone 204 covers the time zone 102 and the time zone 202. This shows a special operation for performing the operation of the immunoanalysis using also the time assigned to the biochemical analysis.

Aa examples of this, there is an example where, for an immune item for which a large amount of reagent dispensed is set, sample dispensing is performed at two different times.

Where such a special operation is performed, the second time chart may be implemented, instead of the first time chart, and a biochemical analysis in which operational timings are overlapped may be cancelled or no operation may be assigned in advance.

The advantageous effects of the embodiment will be described below.

The automatic analyzer 1 according to the aforementioned first embodiment is an apparatus which allows parallel execution of a first analysis process step and a second analysis process step each for different item. The automatic analyzer includes: one or more common analysis units to be sharedly used in the first and the second analysis process steps; and a control section 3 for controlling an operation of the common analysis unit. The first analysis process step is executable repeatedly in each first cycle time. The second analysis process step is executable repeatedly in each second cycle time. The second cycle time is set as a positive integer multiple of the first cycle time. The first cycle time includes a first time zone, and a second time zone which is not overlapped with the first time zone. A first time chart is provided to operate the common analysis unit for an operation unique to the first analysis process step in the first time zone, and to operate the common analysis unit for an operation unique to the second analysis process step in the second time zone.

This makes it possible to achieve shared use of mechanisms used in different analysis process steps in order to provide a simplification of device structure. Additionally, this makes it possible to avoid interference of timing at which a common mechanism is used in the analysis process steps when a plurality of items is inspected at the same time, thus efficiently performing inspections of a plurality of items.

Further, in response to a measurement request of a measurement item to be measured in the first analysis process step or a measurement item to be measured in the second analysis process step, the control section 3 may execute the operation of a common analysis unit in a first time zone or a second time zone in the first time chart. Because of this, execution of unnecessary operation may be prevented to inhibit wear in each mechanism and/or the like, resulting in a reduction in frequency of apparatus maintenance and/or a reduction in consumption of consumables and/or the like.

Further, the special operation requiring a longer operation time period may be performed on a priority basis while the throughput degradation may be minimized, by virtue of further having the second time chart that is configured to use the common analysis unit for operation unique to the second analysis process step in both the first time zone and the second time zone, and also by virtue of the fact that, where the second time chart is used, particularly, the control section 3 does not perform the first analysis process step requiring use of the first time chart in the time zone in which the second time chart is executed.

### Second Embodiment

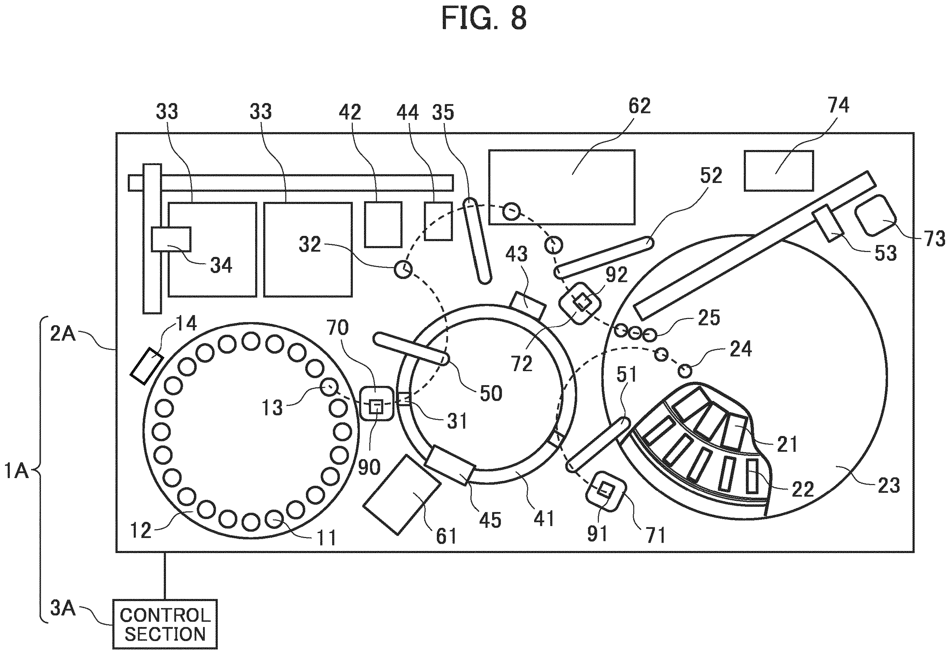

An automatic analyzer and an automatic analysis method according to a second embodiment will be described with reference to Fig. 8 to Fig. 12.

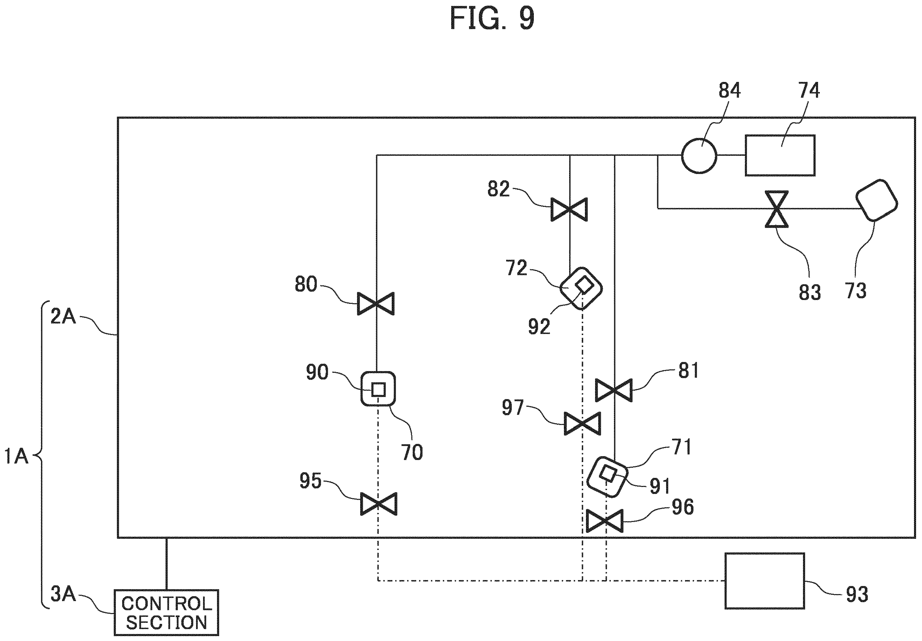

Initially, an overview of the automatic analyzer according to the embodiment is described with reference to Fig. 8 and Fig. 9. Fig. 8 is a diagram illustrating the automatic analyzer according to the second embodiment, while Fig. 9 is a diagram illustrating the connection relationship among a cleaning solution feeder section 74 and cleaning tanks 70, 71, 72, 73.

The automatic analyzer 1A illustrated in Fig. 8 and Fig. 9 is comprised of an analysis section 2A and a control section 3A in like manner with the automatic analyzer 1 in the first embodiment.

In addition to the analysis section 2 of the automatic analyzer 1 illustrated in Fig. 1, the analysis section 2A includes a cleaning tank 70 and a vacuum tank 90 for the sample dispensing mechanism 50, a cleaning tank 71 and a vacuum tank 91 for the first reagent dispensing mechanism 51, a cleaning tank 72 and a vacuum tank 92 for the second reagent dispensing mechanism 52, a cleaning tank 73 for the reagent stirring mechanism 53, a cleaning solution feeder section 74 for feeding a cleaning solution to the cleaning tanks 70, 71, 72, 73, and a vacuum feeder section 93 for lowering each inner pressure within the vacuum tanks 90, 91, 92.

The control section 3A is basically identical in configuration to the control section 3 except for the first time chart and the second time chart which are stored therein.

As illustrated in Fig. 9, the cleaning solution feeder section 74 and the cleaning tanks 70, 71, 72, 73 are connected through a flow passage. Electromagnetic valves 80, 81, 82, 83 and a pump 84 are installed at some midpoints in the connection flow passage. In each of the cleaning tanks 70, 71, 72, 73, the cleaning solution is discharged to a corresponding dispensing nozzle or stirring rod in the analysis section 2A in order to clean the external surface thereof. Also, the cleaning solution discharged by the cleaning solution feeder section 74 may be configured to be aspirated by the dispensing nozzle to clean the interior of the dispensing nozzle. Further, the cleaning solution feeder section 74 may be configured to be connected directly to the flow passage in the dispensing nozzle so that the interior of the dispensing nozzle is cleaned.

The discharge and stop of the discharge operation for the cleaning solution in the cleaning tank 70, 71, 72, 73 may be controlled by the opening and closing of each electromagnetic valve 80, 81, 82, 83. The pressure by the pump 84 is used for the drive force for discharging the cleaning solution. The principle of operation of the pump is here no object. As a cleaning solution, water used in the analysis section may be used. Alternatively, the cleaning solution may be provided separately using a reagent bottle and/or the like.

In proximity to the cleaning tanks 70, 71, 72, vacuum tanks 90, 91, 92 are respectively installed for performing vacuum-drying. The vacuum tanks 90, 91, 92 are connected to the vacuum feeder section 93, and are designed such that the vacuum aspiration and stop are able to be controlled by the opening and closing of the electromagnetic valves 95, 96, 97 as in the case with the cleaning tanks 70, 71, 72, 73. The structure for the vacuum tanks 90, 91, 92 and the vacuum feeder section 93 is comprised of similar flow passage structure to the cleaning tanks 70, 71, 72, 73 and the cleaning solution feeder section 74. The advantageous effects of the present invention are provided as in the case with the following description using a cleaning tank as an example.

In general, the rate of discharge flow of cleaning solution is required to be sufficiently ensured in the case of cleaning particularly the exterior surface of the dispensing nozzle and the like. Therefore, if the cleaning solution is discharged simultaneously in a plurality of cleaning tanks 70, 71, 72, 73, the rate of discharge flow of cleaning solution reduces in each of the cleaning tanks 70, 71, 72, 73, leading to a concern about a decrease in cleaning efficiency. On the other hand, the discharge volume can be increased in advance in expectation of a decrease in the rate of discharge flow. However, use of only a single cleaning tank 70, 71, 72, 73 results in an excessive discharge of the cleaning solution, leading to inefficient use of the cleaning solution. Also, an overflow of the cleaning solution may be caused depending on the structure of the cleaning tank 70, 71, 72, 73.

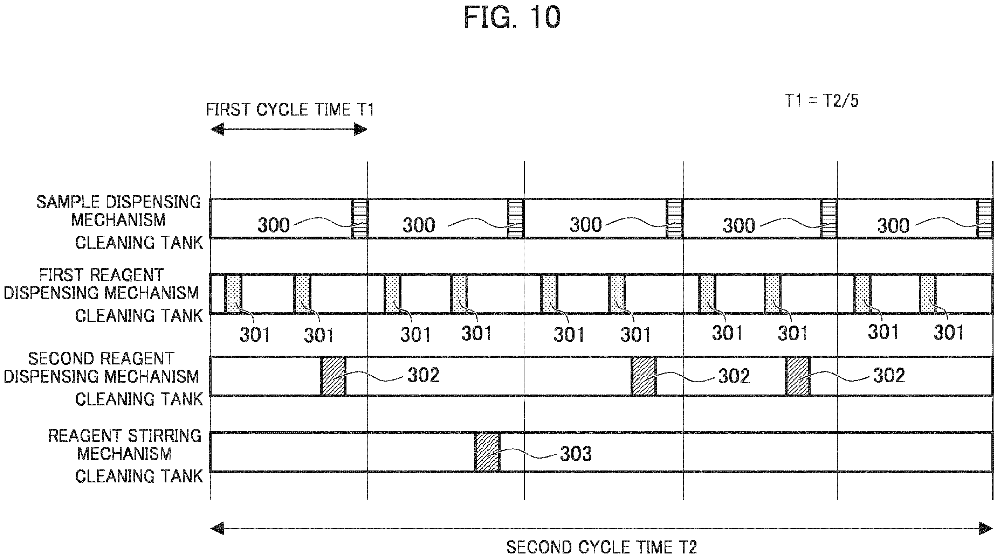

Fig. 10 is a diagram illustrating an analysis cycle of simultaneous performance of the biochemical analysis and the immunoanalysis. The second cycle time T2 for the immunoanalysis is here configured as a positive integer multiple of the first cycle time T1 for the biochemical analysis. Fig. 10 shows T1 = T2/5 as in the case of the first embodiment.

In a time zone 300, the cleaning tank 70 discharges the cleansing solution to clean the sample dispensing mechanism 50. In a time zone 301, the cleaning tank 71 discharges the cleansing solution to clean the first reagent dispensing mechanism 51. In a time zone 302, the cleaning tank 72 discharges the cleansing solution to clean the second reagent dispensing mechanism 52. In a time zone 303, the cleaning tank 73 discharges the cleansing solution to clean the reagent stirring mechanism 53.

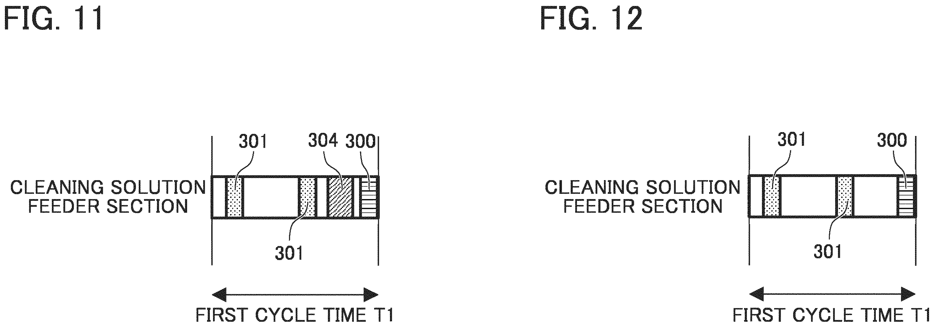

Fig. 11 illustrates the case where the cleaning operation in the biochemical analysis and the cleaning operation in the immunoanalysis are performed in parallel in the first cycle time T1 of the first time chart. On the other hand, Fig. 12 illustrates the case where only the cleaning operation in the biochemical analysis is performed but the cleaning operation in the immunoanalysis is not performed in the first cycle time T1 of the first time chart.

In the time zone 304, the cleaning tank 72 discharges the cleaning solution to clean the second reagent dispensing mechanism 52, and also the cleaning tank 73 discharges the cleaning solution to clean the reagent stirring mechanism 53. Because of this, timing is determined so as to prevent an overlap of time periods of the respective operations.

Here, timing for discharging the cleaning solution in the biochemical analysis, i.e., timing for using the cleaning solution feeder section 74 is in the time zone 300 and the time zone 301. Timing for using the cleaning solution feeder section 74 in the immunoanalysis is in the time zone 300, the time zone 302 and the time zone 303. The time zones 300, 301, 302, 303 are configured to prevent overlap with each other. Therefore, in the biochemical analysis and the immunoanalysis, the required cleaning solution discharging operations are able to be performed absolutely independently of each other.

Likewise, in the vacuum tanks 90, 91, 92, timing at which each vacuum tank is used is basically set in the latter half of or immediately after the timing at which the cleaning tanks 70, 71, 72 are used, and the time chart is approximately the same as the cleaning tanks 70, 71, 72, so that details are omitted.

Also, in the embodiment, the time zone 300 is configured to be shared by both the biochemical analysis and the immunoanalysis. This is because the same cleaning operation may be applied because of use of the sample dispensing mechanism 50 as a common analysis unit. On the other hand, the time zone 300 may be divided or timing may be changed such that cleaning of the sample dispensing mechanism 50 is used for only each analysis. In this case, time zones in which the cleaning solution is discharged in the respective analyses as described above may be configured to prevent overlap with each other.

It is noted that, similarly to the first embodiment, it is possible to select, as appropriate depending on analysis conditions, which of the operation for the biochemical analysis and the operation for the immunoanalysis is performed in each common analysis unit. Also, in the case where the analyses are intermittently performed, if the cleaning operation is not required, the operation may not be performed simply.

Other configurations and operations are approximately the same as those of the automatic analyzer and the automatic analysis method in the aforementioned first embodiment, and thus details are omitted.

Approximately similar advantageous effects in the automatic analyzer and the automatic analysis method according to the aforementioned first embodiment are provided also in the automatic analyzer and the automatic analysis method according to the second embodiment. Even when the biochemical analyses and the immunoanalysis are concurrently and continuously performed, the mutual interference of timing for using the cleaning solution feeder section 74 may be prevented from causing a decrease in cleaning efficiency and thus the adverse effects on the analysis performance may be mitigated.

### Others

The present invention is not limited to the above-described embodiments, and further includes various modifications. For example, the above-described embodiments have been described in detail in order to facilitate the understanding of the present invention, and the present invention is not necessarily limited to those including all of the described configurations.

In addition, part of the configuration of one embodiment can be replaced with the configurations of other embodiments, and in addition, the configuration of the one embodiment can also be added with the configurations of other embodiments. In addition, part of the configuration of each of the embodiments can be subjected to addition, deletion, and replacement with respect to other configurations.

### List of Reference Signs

1, 1A: automatic analyzer
2, 2A: analysis section
3, 3A: control section
11: sample container
12: sample holding section
13: sample aspiration position
14: sample information acquisition section
21: first reagent container
22: second reagent container
23: reagent holding section
24: first reagent aspiration position
25: second reagent aspiration position
31: first reaction vessel
32: second reaction vessel
33: reaction vessel tray
34: first conveying mechanism
35: second conveying mechanism
41: first incubator
42: second incubator
43: first stirring mechanism
44: second stirring mechanism
45: cleaning mechanism
50: sample dispensing mechanism (first dispensing mechanism, second dispensing mechanism)
51: first reagent dispensing mechanism (first dispensing mechanism)
52: second reagent dispensing mechanism (second dispensing mechanism)
53: reagent stirring mechanism
61: first measurement section
62: second measurement section
70: cleaning tank for sample dispensing mechanism (first cleaning tank, second cleaning tank)
71: cleaning tank for first reagent dispensing mechanism
(first cleaning tank)
72: cleaning tank for second reagent dispensing mechanism (second cleaning tank)
73: cleaning tank for reagent stirring mechanism
74: cleaning solution feeder section
80, 81, 82, 83, 95, 96, 97: electromagnetic valve
84: pump
90: vacuum tank for sample dispensing mechanism (first vacuum tank, second vacuum tank)
91: vacuum tank for first reagent dispensing mechanism (first vacuum tank)
92: vacuum tank for second reagent dispensing mechanism (second vacuum tank)
93: vacuum feeder section
101: time zone in which sample dispensing mechanism is used for biochemical analysis
102: time zone in which sample holding section is used for biochemical analysis
111: time zone in which reagent holding section is used when dispensing first reagent for biochemical analysis
112: time zone in which reagent holding section is used when dispensing second reagent for biochemical analysis
201: time zone in which sample dispensing mechanism is used for immunoanalysis
202: time zone in which sample holding section is used for immunoanalysis
203: time zone in which sample dispensing mechanism is used when performing special operation for immunoanalysis
204: time zone in which sample holding section is used when performing special operation for immunoanalysis
210: time zone in which reagent holding section is used when dispensing any one of first reagent, second reagent, and third reagent for immunoanalysis
211: time zone in which reagent holding section is used when dispensing first reagent for immunoanalysis
212: time zone in which reagent holding section is used when dispensing second reagent for immunoanalysis
213: time zone in which reagent holding section is used when dispensing third reagent for immunoanalysis
300: time zone in which cleaning solution is used in cleaning tank
301: time zone in which cleaning solution is used in cleaning tank for first reagent dispensing mechanism
302: time zone in which cleaning solution is used in cleaning tank for second reagent dispensing mechanism
303: time zone in which cleaning solution is used in cleaning tank for reagent stirring mechanism
304: time zone in which cleaning solution is used in cleaning tanks for second reagent dispensing mechanism and reagent stirring mechanism

## Claims

1. An automatic analyzer which allows parallel execution of a first analysis process step and a second analysis process step each for different item, the automatic analyzer comprising:
one or more common analysis units to be sharedly used in the first and the second analysis process steps; and
a control section for controlling an operation of the common analysis unit, wherein:
the first analysis process step is executable repeatedly in each first cycle time;
the second analysis process step is executable repeatedly in each second cycle time;
the second cycle time is set as a positive integer multiple of the first cycle time;
the first cycle time includes a first time zone, and a second time zone which is not overlapped with the first time zone; and
a first time chart is provided to operate the common analysis unit for an operation unique to the first analysis process step in the first time zone, and to operate the common analysis unit for an operation unique to the second analysis process step in the second time zone.

2. The automatic analyzer according to claim 1, wherein in response to a measurement request of a measurement item to be measured in the first analysis process step, or in the second analysis process step, the control section operates the common analysis unit in the first time zone or the second time zone of the first time chart.

3. The automatic analyzer according to claim 1 or 2, further comprising a second time chart configured to use the common analysis unit for an operation unique to the second analysis process step both in the first and the second time zones.

4. The automatic analyzer according to claim 3, wherein when using the second time chart, the control section does not execute the first analysis process step required to use the first time chart in a time zone in which the second time chart is implemented.

5. The automatic analyzer according to claim 1, further comprising a sample dispensing mechanism as the common analysis unit for dispensing the sample into a reaction vessel to be used in the first and the second analysis process steps.

6. The automatic analyzer according to claim 1, further comprising an incubator mechanism as the common analysis unit for holding a reaction vessel to be used in the first and the second analysis process steps.

7. The automatic analyzer according to claim 1, further comprising a stirring mechanism as the common analysis unit for stirring reaction liquid in a reaction vessel to be used in the first and the second analysis process steps.

8. The automatic analyzer according to any one of claims 5 to 7, wherein the reaction vessel used in the first analysis process step is different from the reaction vessel used in the second analysis process step.

9. The automatic analyzer according to any one of claims 5 to 7, wherein the reaction vessel used in the first analysis process step is the same as the reaction vessel used in the second analysis process step.

10. The automatic analyzer according to claim 1, further comprising a sample holding section as the common analysis unit for holding the sample container which stores the sample to be analyzed in the first and the second analysis process steps.

11. The automatic analyzer according to claim 1, further comprising a sample information acquisition section as the common analysis unit for acquiring sample information attached to a sample container containing a sample to be analyzed in the first and the second analysis process steps.

12. The automatic analyzer according to claim 1, further comprising a sample dispensing mechanism as the common analysis unit for fractionating a reagent from a reagent container to be used in the first and the second analysis process steps.

13. The automatic analyzer according to claim 1, further comprising a reagent holding section as the common analysis unit for holding a reagent container to be used in the first and the second analysis process steps.

14. The automatic analyzer according to claim 12 or 13, wherein the reagent to be used in the first analysis process step is different from the reagent to be used in the second analysis process step.

15. The automatic analyzer according to claim 1, further comprising:
a first dispensing mechanism to be used in the first analysis process step;
a second dispensing mechanism to be used in the second analysis process step;
a first cleaning tank for cleaning the first dispensing mechanism;
a second cleaning tank for cleaning the second dispensing mechanism; and
a cleaning solution feeder section as the common analysis unit for feeding cleaning solution to the first and the second cleaning tanks.

16. The automatic analyzer according to claim 1, further comprising:
a first dispensing mechanism to be used in the first analysis process step;
a second dispensing mechanism to be used in the second analysis process step;
a first vacuum tank for vacuum-drying the first dispensing mechanism;
a second vacuum tank for vacuum-drying the second dispensing mechanism; and
a vacuum feeder section as the common analysis unit for lowering each inner pressure of the first and the second vacuum tanks.

17. An automatic analysis method which allows parallel execution of a first analysis process step and a second analysis process step each for different item, wherein:
the first analysis process step is executable repeatedly in each first cycle time;
the second analysis process step is executable repeatedly in each second cycle time;
the second cycle time is set as a positive integer multiple of the first cycle time;
the first cycle time includes a first time zone, and a second time zone which is not overlapped with the first time zone; and
one or more common analysis units sharedly used in the first and the second analysis process steps are operated for performing an operation unique to the first analysis process step in the first time zone, and operated for performing an operation unique to the second analysis process step in the second time zone.
